## Europäisches Patentamt
## European Patent Office
## Office européen des brevets

(19)

(11) Veröffentlichungsnummer : **0 134 297**
**B1**

(12)

# EUROPÄISCHE PATENTSCHRIFT

(45) Veröffentlichungstag der Patentschrift :
03.12.86

(21) Anmeldenummer : 83108967.7

(22) Anmeldetag : 10.09.83

(51) Int. Cl.⁴ : **B 01 D 46/02**, B 01 D 47/06,
B 01 D 53/18

(54) Nassfilter zum Abscheiden von Feststoffen und Absorbieren von Schadgasen und Geruchsstoffen.

(30) Priorität : 16.07.83 DE 3325807

(43) Veröffentlichungstag der Anmeldung :
20.03.85 Patentblatt 85/12

(45) Bekanntmachung des Hinweises auf die Patenterteilung : 03.12.86 Patentblatt 86/49

(84) Benannte Vertragsstaaten :
AT BE CH DE FR GB IT LI NL SE

(56) Entgegenhaltungen :
DE-A- 3 004 435
DE-A- 3 045 759
DE-B- 2 521 828
GB-A- 2 099 329

(73) Patentinhaber : Intensiv-Filter GmbH & Co KG.
Vosskuhlstrasse 63
D-5620 Velbert 11 (DE)

(72) Erfinder : Lehrer, Anton
Lechermannstrasse 33
D-8070 Ingolstadt (DE)

(74) Vertreter : Geiersbach, Walter, Dipl.-Ing.
Wickrather Strasse 43
D-4000 Düsseldorf 11 (DE)

EP 0 134 297 B1

## Beschreibung

Die Erfindung betrifft ein Naßfilter zum Abscheiden von Feststoffen und zum Absorbieren von Schadgasen und Geruchsstoffen mit Hilfe von flüssigkeits- oder dampfbenetzten Filterelementen in Form von Filterschläuchen, Filtertaschen, Filterzellen, Filterpatronen od. dgl., die von den zu filternden Gasen von Außen nach innen durchströmt und in einem Gehäuse mit ihrem offenen Ende an einem Boden befestigt sind, der das Gehäuse in eine Rohgaskammer mit mindestens einem Rohgaseinlaß und eine Reingaskammer mit einem Reingasauslaß trennt.

Es sind Naßfilter bekannt, bei denen lotrecht hängend angeordnete Filterschläuche von den zu reinigenden Rohgasen von innen nach außen durchströmt sind (DE-C-17 71 407). Zum Reinigen des Naßfilters werden die Filterschläuche auf ihrer Anströmseite von innen und von oben her mit einer Waschflüssigkeit befeuchtet. Mit diesem bekannten Naßschlauchfilter werden keine Feststoffe abgeschieden.

Es ist ein biologisches Naßschlauchfilter bekannt, bei dem die lotrecht hängenden Schläuche zumindest auf ihrer Anströmseite von oben her mit einer Waschflüssigkeit befeuchtet werden (DE-A-30 04 435). Die zu reinigenden Gase strömen etwa waagerecht durch die Schlauchwände hindurch. Die Waschflüssigkeit enthält Mikroorganismen und fließt an der Filterfläche entlang, auf der sich ein biologischer Rasen bildet. Die zu desodorierenden Gase sind gezwungen, diesen Flüssigkeitsfilm zu durchdringen. Vorher werden sie von festen Teilchen gereinigt, vorzugsweise mittels eines normalen filternden Abscheiders oder Wäschers. Danach strömen sie mit einem kleinen Teil der Waschflüssigkeit durch den als Filterhilfsschicht dienenden biologischen Rasen und das Filtertuch. Dabei findet der biologische Abbau der Geruchsstoffe statt. Mit einem biologischen Filter dieser Art können also unlösbare Feststoffe in Dauerbetrieb nicht abgeschieden werden. Ferner werden die benetzten Staubteilchen durch die räumliche Begrenzung sofort wieder an das Filterelement angeströmt.

Der Erfindung liegt die Aufgabe zugrunde, ein Naßfilter der eingangs genannten Art so auszubilden, daß mit möglichst geringen Druckverlusten und somit möglichst geringem Energieaufwand aus Rohgasen in Dauerbetrieb Feststoffe abgeschieden und Schadgase und Geruchsstoffe absorbiert werden können.

Diese Aufgabe wird mit der Erfindung dadurch gelöst, daß über die Wand der Rohgaskammer und über den Boden des Gehäuses zwischen den einseitig offenen Filterelementen verteilt Düsen für den Austritt von Waschflüssigkeit und in der Reingaskammer über den offenen Enden der Filterelemente in die Filterelemente gerichtete Düsen für den Austritt von Druckgas angeordnet sind.

Der mit der Erfindung erzielbare technische Fortschritt beruht auf folgenden Vorteilen : Durch die Anordnung und Verteilung der Düsen für den Austritt der Wachflüssigkeit werden die Filterelemente von außen angeströmt. Dadurch können die benetzten Feststoffpartikel frei und ungestört abfliessen. Dadurch ist es möglich, das Filter mit hohen Feststoffmengen zu beaufschlagen. Werden bekannte Filterelemente verwendet, kann der Grad der Abscheidung vorherbestimmt werden. Die Tropfenabscheidung erfolgt an den Filterelementen selbst. Dadurch können die sonst im Naßwäscher erforderlichen Tropfenabscheider entfallen.

Durch die Anordnung und Verteilung der Düsen für den Austritt der Druckluft werden die Filterelemente mit Druckluft als Spülluft im Gegenstrom gereinigt. Dadurch ist es möglich, die bei der Trockenentstaubung bekannte Druckluftreinigung mit der bekannten Staub- und Aerosolbenetzung zu kombinieren und auf den Filterelementen selbst durchzuführen.

Für die Problemlösung liegt ein Bedürfnis vor. Der geringe Druckverlust führt vor allem bei der Abscheidung von Feinstäuben zu hohen Standzeiten der Filterelemente und zu Energieeinsparung.

Weitere wesentliche Merkmale der Erfindung sind im folgenden aufgeführt. Nach einem Merkmal, dem wesentliche Bedeutung zukommt, ist mindestens eine weitere Düse für den Austritt von Flüssigkeit in dem bzw. in den Rohgaseinläßen angeordnet. Bei der praktischen Ausführung hat das Gehäuse einen Austrag für die anfallende Schlammflüssigkeit, der in einen Klärtank bis unter die Oberfläche der in ihm enthaltenen Schlammflüssigkeit reicht.

Zur Versorgung der Düsen mit Flüssigkeit ist der Klärtank über eine Leitung, ein Stellventil und eine Pumpe mit einem Leitungssystem für die Düsen verbunden. Um einen Teil der Flüssigkeit klären und, falls erforderlich, neutralisieren zu können, ist von der Flüssigkeitsleitung über ein Stellventil eine Leitung abgezweigt.

Um die geklärte und gegebenenfalls neutralisierte Flüssigkeit in bestimmter Menge wieder in den Klärtank zurückleiten zu können, ist der Klärtank über ein Schwimmerventil und ein Stellventil mit einer Leitung verbunden. Um verdunstete Flüssigkeit ausgleichen zu können, ist der Klärtank über ein Schwimmerventil und ein Stellventil mit einer Pumpe verbunden. Zur Versorgung mit Druckluft sind die Düsen für den Austritt von Druckluft über eine Druckluftzuführungsleitung mit einem Druckluftspeicher verbunden.

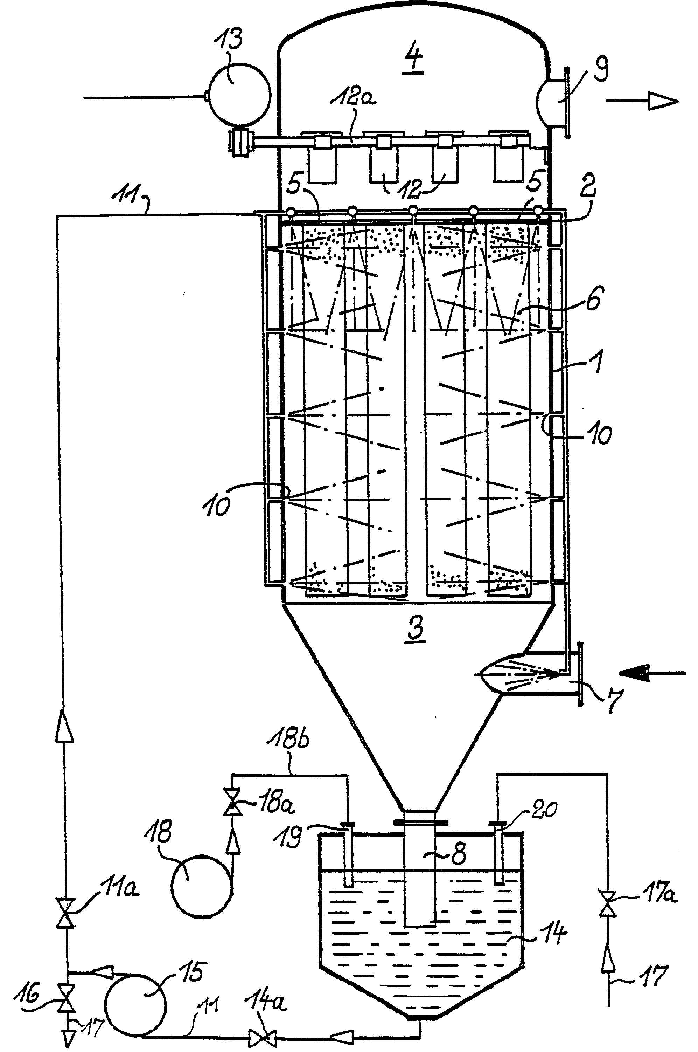

Die Erfindung ist in der Zeichnung am Ausführungsbeispiel eines regenerierbaren Naßfilters in einem Rundfiltergehäuse veranschaulicht.

Das Naßfilter gemäß der Erfindung besteht aus einem runden, rechteckigen oder quadratischen Gehäuse 1, das durch einen Boden 2 in eine Rohgaskammer 3 und eine Reingaskammer 4 unterteilt ist. Im Boden 2 sind mehrere Öffnungen 5 vorhanden. In jede Öffnung 5 ist ein Filterschlauch 6 mit seinem offenen Ende eingehängt. Das andere Ende des Filterschlauches 6 ist geschlossen.

Die Rohgaskammer 3 hat einen oder mehrere Rohgaseinläße 7 für das mit Feststoffen, Schadgasen und Aerosolen beladene Rohgas und einen Austrag 8 für das mit Flüssigkeit benetzte Staub- und Aerosolgemisch. Die Reingaskammer 4 hat einen Reingasauslaß 9 für das gereinigte Gas.

Düsen 10 für den Austritt von Flüssigkeit sind über einen Teil der Wand der Rohgaskammer 3 gleichmäßig verteilt angeordnet. Sie sind von außen auf die Filterelemente 6 gerichtet. Weitere Düsen 10 für den Austritt von Flüssigkeit sind über den Trennboden 2 zwischen den Filterelementen 6 gleichmäßig verteilt angeordnet, so daß sie ebenfalls von außen auf die Filterelemente 6 gerichtet sind. Eine Düse 10 ist in dem Rohgaseinlaß 7 angeordnet. Die Flüssigkeit wird den Düsen 10 über ein Rohrleitungssystem 11 mit einem Stellventil 11a für die einzustellende Menge zugeführt.

Über den offenen Enden der Filterelemente 6 sind in die Filterelemente 6 gerichtete Düsen 12 für den Austritt von Druckgas angeordnet. Sie sind über eine Druckgaszuführungsleitung 12a mit einem Druckgasspeicher 13 verbunden, in dem ein Vorrat an Druckgas ständig bereit gehalten wird.

Die Vorrichtung gemäß der Erfindung arbeitet wie folgt : Das mit Feststoffen, Schadgasen und Geruchsstoffen (Aerosolen) beladene Rohgas strömt durch den Rohgaseinlaß 7 in die Rohgaskammer 3 und von außen gegen die Filterschläuche 6, in sie hinein und durch die Öffnungen 5 in die Reingaskammer 4 und aus dem Reingasauslaß 9 hinaus in die umgebende Luft.

Gleichzeitig wird Flüssigkeit aus den Düsen 10 von außen gegen die Filterelemente 6 gesprüht, um die Filterelemente 6 gleichmäßig zu benetzen. Hierdurch werden die ausgefilterten Stoffe und Gase durch Tropfenabscheidung an der Außenseite der Filterschläuche 6 abgespült. Sie werden zusammen mit der Spülflüssigkeit in dem konischen Teil des Gehäuses 1 gesammelt und zum Austrag 8 geführt. Die austretende Schlammflüssigkeit wird in einem Klärtank 14 gesammelt und vorgeklärt. Der Austrag 8 ist in den Flüssigkeitsspiegel eingetaucht, um das Eintreten von Luft zu vermeiden.

Vom Boden des Klärtanks 14 aus wird die vorgeklärte Flüssigkeit über ein Stellventil 14a abgezogen und über eine Pumpe 15 und die Leitung 11 nach den Düsen 10 zurückgeführt. Über ein Stellventil 16 kann ein Teil der Flüssigkeit zur Klärung und, wenn erforderlich, auch zur Neutralisierung einer nicht weiter dargestellten Klär- und Neutralisierungsanlage zugeleitet werden. Über eine Leitung 17 und ein Stellventil 17a wird die geklärte und gegebenenfalls neutralisierte Flüssigkeit in den Klärtank 14 wieder zurückgeleitet. Verdunstete Flüssigkeit kann von einer Pumpe 18 über ein Stellventil 18a, eine Leitung 18b und ein Schwimmerventil 19 in den Klärtank 14 nachgefüllt werden.

Zum Regenerieren der Filterelemente 6 von den mit Flüssigkeit benetzten Feststoffen, Schadgasen und Aerosolen werden die Düsen 12 kurzzeitig mit Druckluft beaufschlagt, die als Spülluft in Form eines gerichteten Strahls in die Filterschläuche 6 eindringt und sie kurzzeitig kräftig aufbläst. Dabei werden die Filterelemente 6 durch Rückspülung gereinigt.

## Patentansprüche

1. Naßfilter zum Abscheiden von Feststoffen und zum Absorbieren von Schadgasen und Geruchsstoffen mit Hilfe von flüssigkeits- oder dampfbenetzten Filterelementen (6) in Form von Filterschläuchen, Filtertaschen, Filterzellen, Filterpatronen od. dgl., die von den zu filternden Gasen von außen nach innen durchströmt und in einem Gehäuse (1) mit ihrem offenen Ende an einem Boden (2) befestigt sind, der das Gehäuse (1) in eine Rohgaskammer (3) mit mindestens einem Rohgaseinlaß (7) und eine Reingaskammer (4) mit einem Reingasauslaß (9) trennt, dadurch gekennzeichnet, daß über die Wand der Rohgaskammer (3) und über den Boden (2) des Gehäuses (1) zwischen den einseitig offenen Filterelementen (6) verteilt Düsen (10) für den Austritt von Waschflüssigkeit und in der Reingaskammer (4) über den offenen Enden der Filterelemente (6) in die Filterelemente (6) gerichtete Düsen (12) für den Austritt von Druckgas angeordnet sind.

2. Naßfilter nach Anspruch 1, dadurch gekennzeichnet, daß mindestens eine weitere Düse (10) für den Austritt von Flüssigkeit in dem bzw. den Rohgaseinläßen (7) angeordnet ist.

3. Naßfilter nach Anspruch 1 oder 2, dadurch gekennzeichnet, daß das Gehäuse (1) einen Austrag (8) für die anfallende Schlammflüssigkeit hat, der in einen Klärtank (14) bis unter die Oberfläche der in ihm enthaltenen Schlammflüssigkeit reicht.

4. Naßfilter nach Anspruch 1, 2 oder 3, dadurch gekennzeichnet, daß der Klärtank (14) über eine Leitung (11), ein Stellventil (14a) und eine Pumpe (15) mit einem Leitungssystem für die Düsen (10) verbunden ist.

5. Naßfilter nach Anspruch 1, dadurch gekennzeichnet, daß die Düsen (12) für den Austritt von Druckgas über eine Druckgaszuführungsleitung (12a) mit einem Druckgasspeicher (13) verbunden sind.

## Claims

1. A wet filter for separating solids and absorbing toxic gases and odorous substances by means of liquid or vapour-wetted filter elements (6) in the form of filter hoses, bags, cells, cartridges or the like through which flow in the inward direction the gases to be filtered and which are secured at their open end to a plate (2) in a casing (1), the plate dividing the casing (1) into a crude-gas chamber (3) having at least one crude-gas inlet (7) and a pure-gas chamber (4) having a pure-gas outlet (9), characterised in that nozzles (10) for discharging washing fluid are distributed over the wall of the crude-gas chamber (3) and over the plate (2) between the filter elements (6), which are open at one end, and nozzles (12) for discharging pressure gas are disposed in the pure-gas chamber (4) above the open ends of the filter elements (6) and directed towards the filter elements (6).

2. A wet filter according to claim 1, characterised in that at least a second nozzle (10) is provided for discharging fluid into the crude-gas inlet or inlets (7).

3. A wet filter according to claim 1 or 2, characterised in that the casing (1) has a discharge vessel (8) for the accumulating sludge-laden fluid and extending into a settling tank (14) to below the surface of the sludge-laden fluid therein.

4. A wet filter according to claim 1, 2 or 3, characterised in that the settling tank (14) is connected by a pipe (11), a regulating valve (14a) and a pump (15) to a pipe system for the nozzles (10).

5. A wet filter according to claim 1, characterised in that the nozzles (12) for discharging pressure gas are connected *via* a supply pipe (12a) to a compressed-gas store (13).

**Revendications**

1. Filtre humide pour la séparation de matières solides et pour l'absorption de gaz polluants et de substances dégageant des odeurs au moyen d'éléments filtrants (6) imprégnés de liquide ou de vapeur et constitué par des sacs filtrants, des poches filtrantes, des cellules filtrantes, des cartouches filtrantes ou analogues, qui sont traversés de l'extérieur vers l'intérieur par les gaz à filtrer et sont fixés dans une enveloppe (1), par leur extrémité ouverte, à un fond (2) qui subdivise l'enveloppe (1) en une chambre à gaz brut (3), comprenant au moins un orifice d'arrivée (7) du gaz brut, et en une chambre à gaz purifiée (4), comprenant un orifice de sortie (9) du gaz purifié, caractérisé en ce qu'il comporte, réparties sur toute la paroi de la chambre (3) à gaz brut et sur le fond (2) de l'enveloppe (1) entre les éléments filtrants (6), ouverts d'un côté, des buses (10) assurant la sortie du liquide de lavage et, dans la chambre (4) à gaz purifié, des buses (12) situées au-dessus des extrémités ouvertes des éléments filtrants (6) et dirigées vers l'intérieur des éléments filtrants (6) et assurant la sortie de gaz sous pression.

2. Filtre humide selon la revendication 1, caractérisé en ce qu'il comprend au moins une autre buse (10) pour la sortie du liquide dans le ou dans les orifices (7) d'entrée du gaz brut.

3. Filtre humide selon l'une des revendications 1 ou 2, caractérisé en ce que l'enveloppe (1) comprend pour le liquide boueux obtenu un orifice de sortie (8) qui, dans un récipient de décantation (14) débouche au-dessous de la surface du liquide boueux qui y est contenu.

4. Filtre humide selon l'une des revendications 1, 2, 3, caractérisé en ce que le réservoir de décantation (14) est relié par une canalisation (11), par une soupape de réglage (14a) et par une pompe (15) à un système de canalisation desservant les buses (10).

5. Filtre humide selon la revendication 1, caractérisé en ce que les buses (12) assurant la sortie de gaz comprimé sont reliées par une canalisation d'amenée de gaz sous pression (12a) à un réservoir (13) de gaz sous pression.

0 134 297